# EUROPÄISCHE PATENTSCHRIFT

(11) **EP 3 667 287 B1**
(45) Veröffentlichungstag und Bekanntmachung des Hinweises auf die Patenterteilung: **23.03.2022**
(21) Anmeldenummer: 19209791.3
(22) Anmeldetag: 18.11.2019
(51) Int. Cl.: G01N 3/04

(54) **PRÜFSTAND ZUM UNTERSUCHEN EINER PROBE**
TEST STAND FOR EXAMINING A SAMPLE
BANC D'ESSAI PERMETTANT D'INSPECTER UN ÉCHANTILLON

(30) Priorität: 19.11.2018 DE 102018128984
(43) Veröffentlichungstag der Anmeldung: 17.06.2020
(73) Patentinhaber: Deutsches Zentrum für Luft- und Raumfahrt e.V., 51147 Köln (DE)
(72) Erfinder: ODERMANN, Falk, 01945 Hermsdorf (DE); RÄDEL, Martin, 38195 Vechelde (DE); WILLE, Tobias, 30559 Hannover (DE)
(74) Vertreter: Gramm, Lins & Partner Patent- und Rechtsanwälte PartGmbB

(56) Entgegenhaltungen:
- EP-A1- 3 363 742
- US-A- 5 231 882

## Beschreibung

Die Erfindung betrifft einen Prüfstand zum Untersuchen einer Probe, insbesondere Segmenten und Komponenten von Rotorblättern, Tragflächen und Holmen.

Aufgrund der besonderen gewichtsspezifischen Festigkeit und Steifigkeit sind Faserverbundbauteile heutzutage auch als lasttragende Strukturen kaum mehr wegzudenken. Dabei eignen sich Faserverbundbauteile gerade als Werkstoff bei der Herstellung großskaliger Bauteile besonders gut, da hier die Faserverbundwerkstoffe im Verhältnis zur Größe des Bauteils viel Gewicht einsparen können und so den Gedanken des Leichtbaus besonders gut adressieren.

Anders als bei herkömmlichen Werkstoffen, wie beispielsweise Metallen oder reinen Kunststoffen, weisen Faserverbundwerkstoffe ein anisotropes Tragverhalten auf, da die Lastrichtung, in der Belastungen innerhalb des Bauteils abgetragen werden können, dem Faserverlauf der Verstärkungsfasern entsprechen muss. Bei großskaligen Bauteilen, wie beispielsweise Rotorblättern oder Tragflügeln, kann aufgrund der anisotropen Eigenschaft des Werkstoffes ein komplexes Lastverhalten entstehen, das manchmal nur schwer vorhersagbar ist. Dies ist nicht zuletzt auch der Tatsache geschuldet, dass aufgrund der anisotropen Eigenschaft des Werkstoffes auch komplexe Bauteilstrukturen entstehen, bei denen die Verstärkungsfasern der einzelnen Faserlagen unterschiedliche Richtungen aufweisen, um so zumindest teilweise eine isotrope Werkstoffeigenschaft zu approximieren.

Es gibt demzufolge ein Bedürfnis, derartige großskalige Bauteilstrukturen wie Segmente, Tragflächen, Rotorblätter oder Holme hinsichtlich der zu erwartenden Belastungen zu untersuchen, was insbesondere auch eine zerstörende Untersuchung (Ermittlung einer Maximalbelastung) mit umfasst. Dabei sollen die zu untersuchenden großskaligen Proben insbesondere auf Biegung, Zug, Druck und/oder Schub untersucht werden.

Die EP 2 330 399 A1 offenbart ein System zur Prüfung der Betriebsfestigkeit eines Probenkörpers, wobei hierbei insbesondere Biegemomente bzw. Biegebelastungen aufgebracht werden sollen. Dabei wird der Probenkörper mit einer ersten Seite an einem Fundament fest angeordnet, während die zweite Seite des Probenkörpers an einer Belastungsplatte angeordnet wird, die mit Linearaktuatoren in Wirkverbindung steht. Die Linearaktuatoren sind dabei zur Längenänderung in der Längsachse des Probenkörpers ausgebildet. Hierdurch können Biegemomente auf den Probenkörper aufgebracht werden.

Die DE 10 2010 017 455 A1 offenbart ebenfalls einen Prüfstand zur Prüfung der Betriebsfestigkeit einer Probe, wobei hier die Probe zwischen zwei Lasteinleitungseinheiten angeordnet wird. Die Aktuatoren sind dabei direkt an der Probenaufnahmen angeordnet.

Die DE 10 2010 017 456 A1 offenbart einen Prüfstand zum Prüfen von drehenden und stehenden Bauteilen, die die Einleitung von axialen und radialen Prüfkräften sowie von Biegemomenten in das Getriebe ermöglicht.

Die DE 10 2006 062 794 B4 offenbart eine Prüfvorrichtung für Rumpfschalen in einem Ersatzquerschnitt.

Die D5 (CFM Schiller GmbH: SCHWINGISOLIERUNGS- UND PRUFSTANDSSYS-TEME - Kompetenz in Entwicklung und Fertigung durch mehr als 39 Jahre Erfahrung. Broschüre. [Mai 2018]. URL: http://www.cfm-schiller.de/uploads/pdf/1 CFM Image D.pdf [abgerufen am 06.10.2019]) offenbart eine Übersicht über verschiedene Arten von Prüfständen.

Die EP 3 363 742 A1 zeigt einen Prüfstand, bei dem insgesamt drei Lasteinleitungspunkte vorgesehen sind. Der erste Lasteinleitungspunkt ist dabei mithilfe von Aktuatoren drehbar um eine Längsachse gelagert. Hierdurch können Biegebelastungen in die eingespannte Probe eingebracht werden. Der auf der gegenüberliegenden Seite vorgesehene Lasteinleitungspunkt ist dabei mithilfe von Aktuatoren mit einer ausschließlich axialen Kraft beaufschlagbar.

Es ist daher Aufgabe der vorliegenden Erfindung eine Prüfvorrichtung anzugeben, mit der großskalige Bauteilproben, insbesondere Proben aus einem Faserverbundwerkstoff, hinsichtlich der zu erwartenden Belastungen untersucht werden können. Die Aufgabe wird mit dem Prüfstand gemäß Anspruch 1 erfindungsgemäß gelöst. Gemäß Anspruch 1 wird ein Prüfstand zum Untersuchen einer Probe vorgeschlagen, wobei der Prüfstand eine Grundplatte und zwei an der Grundplatte angeordnete Lasteinleitungseinheiten hat, zwischen denen die zu untersuchende Probe derart anbringbar ist, dass ein erstes Probenende an der ersten Lasteinleitungseinheit und ein dem ersten Probenende gegenüberliegendes zweites Probenende an der zweiten Lasteinleitungseinheit befestigbar ist. Die Lasteinleitungseinheiten sind dabei so ausgebildet, dass zwischen ihnen die zu untersuchende Probe eingebracht bzw. befestigt werden kann, wobei jede Lasteinleitungseinheit so ausgebildet ist, dass sie eine Kraft auf die Probe aufbringen kann, die in Richtung der jeweils gegenüberliegenden anderen Lasteinleitungseinheit oder entgegen der Richtung der jeweils gegenüberliegenden anderen Lasteinleitung wirkt.

Hierzu weist jede Lasteinleitungseinheit ein Hebelelement auf, welches über ein Drehlager mit der Grundplatte verbunden ist, mindestens einen Aktuator, der an einem äußeren Hebelende des Hebelelementes, welches sich von dem Drehlager in entgegengesetzte Richtung zu der jeweils anderen Lasteinleitungseinheit erstreckt, derart befestigt ist, dass durch eine Längenänderung des Aktuators das Hebelelement um die Drehachse des Drehlagers gedreht wird, sowie eine Probenaufnahme, die an einem inneren Hebelende des Hebelelementes, welches sich von dem Drehlager in Richtung zu der jeweils anderen Lasteinleitungseinheit erstreckt, vorgesehen ist und die zum Befestigen zumindest eines Probenendes der zu untersuchenden Probe ausgebildet ist. Die Probenaufnahme kann dabei so ausgebildet sein, dass sie die Probe kraft- und/oder formschlüssig aufnimmt und entsprechend mit dem jeweiligen Hebelelement der entsprechenden Lasteinleitungseinheit verbindet.

Die Lasteinleitungseinheiten sind dabei an der Grundplatte so angeordnet, dass sich die jeweiligen Probenaufnahmen an den inneren Hebelenden gegenüberliegen und durch Längenänderungen der Aktuatoren mindestens eine Biege-, Druck-, Zug- und/oder Schublast auf die zwischen den Probenaufnahmen befestigte Probe aufbringbar ist.

Durch einen derartigen Prüfstand wird es möglich, die zwischen den Lasteinleitungseinheiten angeordnete Probe gleichzeitig auf Biegung sowie Zug oder Druck sowie auf Schub zu belasten wodurch insbesondere großskalige, flächige Strukturbauteile auf eine derartige Belastung untersuchbar werden.

Vorzugsweise können dabei die Aktuatoren über einen Ankerpunkt bzw. Befestigungspunkt ebenfalls mit der Grundplatte verbunden werden, um so die notwenigen Lasten einzuleiten.

Die Grundplatte kann dabei derart ausgebildet sein, dass die Montage der Lasteinleitungseinheiten relativ zueinander variabel ist, wodurch es wiederum möglich wird, Proben verschiedenster Größe zu untersuchen.

Der erfindungsgemäße Prüfstand ist dabei derart ausgebildet, dass Proben mit einer Abmessung von mehr als 1 Meter untersuchbar werden, so dass ganze Teilsegmente großskaliger Bauteile hinsichtlich der auftretenden Belastungen untersucht werden können.

Gemäß einer Ausführungsform ist bei jeder Lasteinleitungseinheit das Drehlager des Hebelelementes derart mit der Grundplatte verbunden, dass die Drehachse des Drehlagers im Wesentlichen senkrecht zu der Grundplatte steht. Hierdurch wird eine Art liegender Aufbau des Prüfstandes realisiert, wodurch die Installation vereinfacht und das Anbringen der Probe in den Probenaufnahmen gerade bei großen Strukturbauteilen deutlich handhabbarer ist.

Gemäß einer Ausführungsform ist bei jeder Lasteinleitungseinheit das Drehlager des Hebelelementes an einem an der Grundplatte angeordneten Widerlager befestigt, wobei das Widerlager fest mit der Grundplatte verbunden ist. Durch diesen modularen Aufbau lässt sich die relative Position der beiden Drehachsen der beiden Lasteinleitungseinheiten zueinander sehr fein positionieren und ausrichten, um die gewünschten Belastungen und Probengrößen zu realisieren.

Dabei ist es denkbar, dass das Drehlager an dem Widerlager lösbar und verschiebbar in Richtung der jeweils anderen Lasteinleitungseinheit angeordnet ist. Das Drehlager lässt sich demzufolge an dem Widerlager in Bezug auf die jeweils andere Lasteinleitungseinheit variabel hinsichtlich des Abstandes montieren.

Dabei kann auch vorgesehen sein, dass die Drehlager an den Widerlagern in Form einer Fest-Los-Lagerung montiert werden, was bedeutet, dass eines der Drehlager an dem jeweiligen Widerlager fest angeordnet ist, während das andere Drehlager an dem Widerlager zumindest in einer Richtung translatorisch verschiebbar angeordnet ist. Beim Aufbringen von entsprechenden Kräften kann dabei das eine Drehlager sich an dem Widerlager translatorisch verschieben, wodurch nicht erwünschte Kräfte aufgrund einer Längenänderung zwischen den beiden Probenaufnahmen kompensiert werden können.

Gemäß einer weiteren Ausführungsform ist bei jeder Lasteinleitungseinheit die Probenaufnahme an einer Adapterplatte derart angeordnet, dass die Probenaufnahme in einer beliebigen Winkelposition um die Probenlängsachse an dem inneren Hebelende montiert werden kann. Hierdurch lässt sich jede der Probenaufnahmen um die Probenlängsachse drehen, wodurch die Probe unter verschiedenen Winkelpositionen einbaubar ist. Die Probenlängsachse ist dabei diejenige Achse der Probe, die sich von der ersten Probenaufnahme zu der zweiten Probenaufnahme erstreckt. Die Probenaufnahmen lassen sich nun um diese Probenlängsachse verdrehen, wodurch die Probe unter verschiedenen Winkelpositionen einbaubar ist.

Gemäß einer weiteren Ausführungsform ist bei jeder Lasteinleitungseinheit die Probenaufnahme an einer Adapterplatte derart angeordnet, dass die Probenaufnahme gegenüber einer Drehachsenebene, die durch die Drehachsen beider Drehlager der Lasteinleitungseinheiten gebildet wird, verschiebbar an dem inneren Hebelende montiert werden kann. Hierdurch lässt sich die zu untersuchende Probe im Hinblick auf die Drehachsenebene verschieben, so dass die Probe entweder innerhalb der Drehachsenebene oder in einem Abstand zu dieser angeordnet wird. Hierdurch lassen sich verschiedene Belastungsarten an der Probe realisieren.

Vorteilhafterweise sind die Lasteinleitungseinheiten spiegelsymmetrisch an der Grundplatte angeordnet, wodurch von beiden Seiten der zu untersuchenden Probe die gleichen oder zumindest hochgradig ähnliche Belastungen in die Probe eingeleitet werden können.

Gemäß einer weiteren Ausführungsform weist der Prüfstand einer Steuerungseinheit zum Ansteuern der Aktuatoren auf, wobei die Steuerungseinheit eingerichtet ist, jeden Aktuator individuell und unabhängig von dem jeweils anderen anzusteuern.

Des weiteren ist die nicht beanspruchte Verwendung eines Prüfstandes wie vorstehend beschrieben zur Untersuchung einer Faserverbund-Bauteilprobe, die aus einem Faserverbundwerkstoff, aufweisend zumindest ein Fasermaterial und ein Matrixmaterial, hergestellt ist.

Die Erfindung wird anhand der beigefügten Figuren beispielhaft näher erläutert. Es zeigen:
- Figur 1: - Perspektivische Darstellung des erfindungsgemäßen Prüfstandes;
- Figur 2: - Darstellung des Prüfstandes in einer Draufsicht;
- Figur 3: - Detaildarstellung eines inneren Hebelendes.

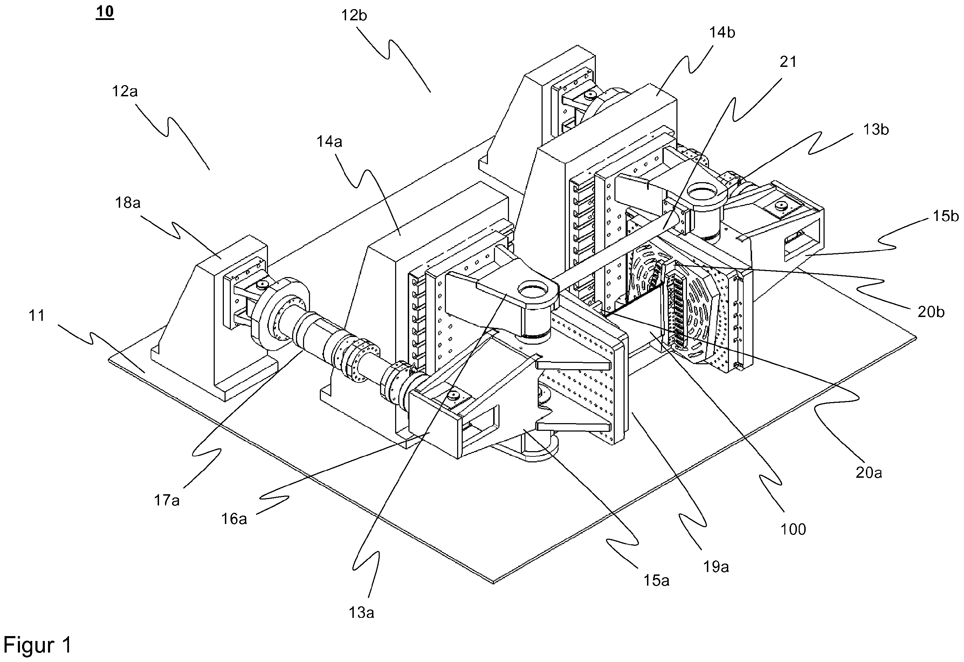

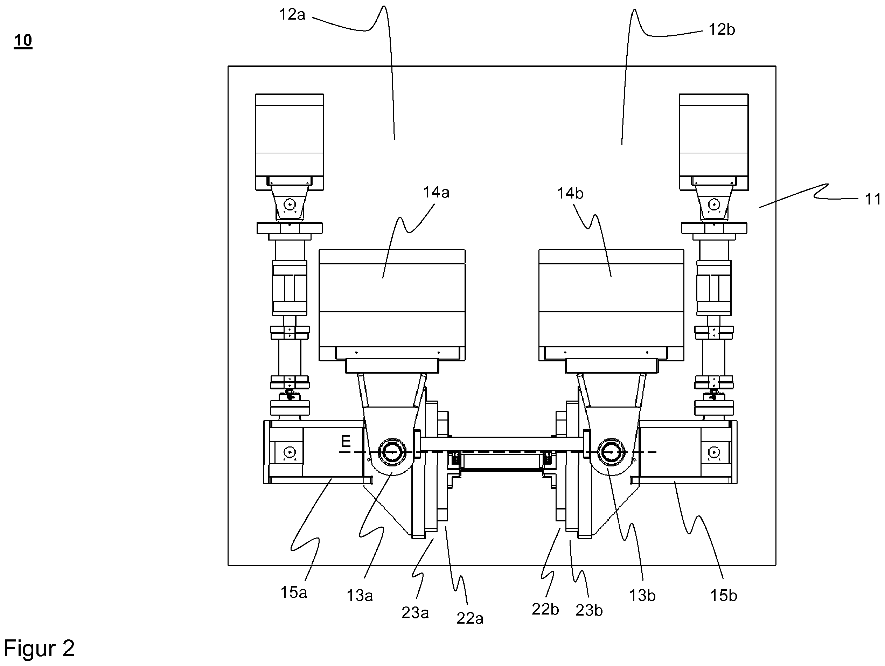

Die Figuren 1 und 2 zeigen den erfindungsgemäßen Prüfstand sowohl in einer perspektivischen Darstellung als auch in einer Draufsicht, wobei die Draufsicht gemäß Figur 2 dem Prüfstand in der perspektivischen Darstellung gemäß Figur 1 entspricht.

Der erfindungsgemäße Prüfstand 10 weist eine Grundplatte 11 auf, auf der zwei spiegelsymmetrisch angeordnete Lasteinleitungseinheiten 12a und 12b angeordnet sind. Aufgrund der spiegelsymmetrischen Anordnung der beiden Lasteinleitungseinheiten 12a und 12b wird nachfolgend die erste Lasteinleitungseinheit 12a näher erläutert. Die Ausführungen hierzu gelten dann entsprechend für die zweite Lasteinleitungseinheit 12b.

Die Lasteinleitungseinheit 12a weist ein Drehlager 13a auf, welches an einem auf der Grundplatte 11 fest angeordneten Widerlager 14a befestigt ist. An dem Drehlager 13a ist ein Hebelelement 15a drehbar gelagert, so dass sich das Hebelelement 15a um die Drehachse des Drehlagers 13a drehen kann.

An dem äußeren Ende 16a des Hebelelementes 15a ist ein Aktuator 17a befestigt, wobei der Aktuator 17a an einem Gegenlager 18a mit der Bodenplatte 11 fest verbunden ist. Der Aktuator 17a steht dabei mit dem äußeren Ende 16a des Hebelelementes 15a derart in Wirkverbindung, dass durch eine Längenänderung des Aktuators 17a das Hebelelement 15a eine Drehbewegung um die Drehachse des Drehlagers 13a ausführt. Hierfür ist der Aktuator 17a an dem Hebelelement 15a an dem äußeren Ende 16a ebenfalls drehbeweglich befestigt.

Ein derartiger Aktuator 17a kann dabei eine Kraft von bis zu 500 kN ausüben. Denkbar sind auch 1000 kN.

Das äußere Ende 16a der ersten Lasteinleitungseinheit 12a liegt dabei ausgehend von dem Drehlager 13a in Richtung weg von der zweiten Lasteinleitungseinheit 12b und wird daher als äußeres Ende bezeichnet.

An dem dem äußeren Ende 16a gegenüberliegenden inneren Ende 19a ist eine Probenaufnahme 20a vorgesehen, die im Ausführungsbeispiel der Figur 1 teilweise aufgrund der perspektivischen Darstellung durch das Hebelelement 15a verdeckt wird. Auf der gegenüberliegenden Seite befindet sich dabei die Probenaufnahme 20b der zweiten Lasteinleitungseinheit 12b. Die Probenaufnahmen 20a und 20b sind nun so ausgebildet, dass sie eine Probe 100 an ihren jeweiligen Enden aufnehmen und mit dem Hebelelement 15a bzw. 15b fest verbinden können, so dass Kräfte, die durch das jeweilige Hebelelement ausgeübt werden, auf die Bauteilprobe 100 übertragen werden können.

Das Drehlager 13a der ersten Lasteinleitungseinheit 12a kann dabei mit dem Drehlager 13b der zweiten Lasteinleitungseinheit 12b über einen Verbindungssteg 21 bzw. mehreren Verbindungsstegen 21 miteinander verbunden werden, um in Richtung der äußeren Enden 16a und 16b wirkenden Kräfte besser auf die Bauteilprobe 100 einleiten zu können.

Die Drehlager 13a und 13b, wie in Figur 1 gezeigt, können dabei an dem Widerlager 14a bzw. 14b beispielsweise mit T-Bolzenverbindern montiert sein, so dass die Drehlager 13a und 13b translatorisch in Richtung der jeweils anderen Lasteinleitungseinheit oder von dieser wegbewegt werden können. Hierdurch kann der Abstand zwischen den beiden Probenaufnahmen 20a und 20b eingestellt werden, um so den Prüfstand 10 an nahezu beliebige Probenformen anpassen zu können.

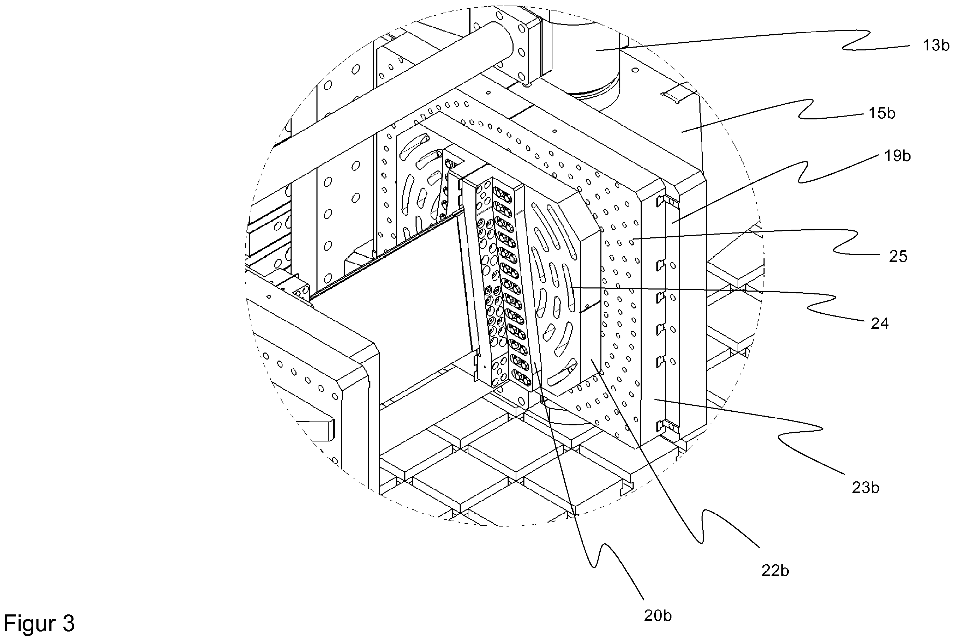

Figur 3 zeigt perspektivisch eine Detaildarstellung der Probenaufnahme 20b der zweiten Lasteinleitungseinheit 12b. An dem inneren Ende 19b des Hebelelementes 15b befinden sich zwischen der Probenaufnahme 20b und dem besagten inneren Ende 19b zwei Adapterplatten 22b und 23b, über die die Probenaufnahme 20b fest mit dem Hebelelement 15b verbunden wird. Die Probenaufnahme 20b ist dabei an der ersten Adapterplatte 22b befestigt, während die erste Adapterplatte 22b wiederum an der zweiten Adapterplatte 23b fest angeordnet wird. Die im Ausführungsbeispiel der Figur 3 gezeigten beiden Adapterplatten 22b und 23b können selbstverständlich auch in einer einzigen Adapterplatte ausgeführt sein. Bei der Realisierung über zwei Adapterplatten hat sich jedoch die größtmögliche Flexibilität herausgestellt. Die zweite Adapterplatte 23b ist dann entsprechend an dem inneren Ende 19b des Hebelelementes 15b montiert.

Die erste Adapterplatte 22b weist kreisförmig angeordnete Langlöcher 24 auf, die mit einem kreisförmigen Bohrmuster 25 der zweiten Adapterplatte 23b zusammenwirken können. Das kreisförmige Bohrmuster 25 weist dabei einzelne Bohrungen auf, in denen beispielsweise ein Innengewinde vorgesehen sein kann, so dass durch die kreisförmigen Langlöcher 24 der ersten Adapterplatte 22b entsprechende Halteschrauben in eines oder mehrere Bohrungen des kreisförmigen Bohrmusters 25 hineingeschraubt werden können, um so die erste Adapterplatte 22b fest an der zweiten Adapterplatte 23b befestigen zu können.

Durch das kreisförmige Anordnen von entsprechenden Langlöchern 24 sowie einem kreisförmigen Bohrmuster 25 wird es möglich, die erste Adapterplatte 22b in einer beliebigen Winkelposition zu montieren, so dass darüber auch die Probenaufnahme 20b in einer beliebigen Winkelposition an dem Hebelelement 15a angeordnet werden kann. Hierdurch kann die Probe 100 in jeglicher erdenklichen Ausrichtung entsprechend durch den Prüfstand belastet werden.

Um das Einstellen verschiedener Winkelpositionen zu vereinfachen, ist es beispielsweise denkbar, dass die erste Adapterplatte 22b durch einen einfachen Drehbolzen (nicht dargestellt), der mittig hinter der ersten Adapterplatte 22b angeordnet ist und in eine entsprechende Öffnung der zweiten Adapterplatte 23b eingreift, gelagert ist, so dass die Adapterplatte 22b ohne Halteschrauben um die eigene Achse gedreht werden kann und so in die gewünschte Position ausgerichtet werden kann. Erst dann werden die Schrauben in die kreisförmigen Langlöcher 24b eingesteckt und mit den dahinterliegenden Bohrungen des kreisförmigen Bohrmusters 25 fest verschraubt.

Die zweite Adapterplatte 23b weist an ihrer Rückseite T-förmige Hutschienen auf, die mit an dem Ende 19b des Hebelelementes 15b angeordneten T-Bolzen so in Eingriff bringbar sind, dass die Adapterplatte 23b fest an dem Hebelelement 15b angeordnet werden kann. Aufgrund der Hutschienen bzw. T-förmigen Nuten am hinteren Ende der zweiten Adapterplatte 23b wird die zweite Adapterplatte 23b formschlüssig derart montiert, das sie sich zumindest in eine Richtung translatorisch bewegen lässt. Hierdurch kann die Ausrichtung der zweiten Adapterplatte 23b und somit der ersten Adapterplatte 22b und der Probenaufnahme 20b in Bezug auf die Drehachsenebene (E in Figur 2, Ebene führt aus der Betrachtungsebene heraus) relativ verschoben werden.

Durch das Ausrichten der zweiten Adapterplatte 23b in Bezug auf diese Drehachsenebene E lässt sich der Abstand der Probe 100 von dieser Drehachsenebene E einstellen, wodurch verschiedene Belastungsarten, die auf die Probe 100 einwirken sollen, eingestellt werden können.

Ist die zweite Adapterplatte 23b translatorisch so verschoben und eingestellt, dass die Bauteilprobe 100 mit ihrer Hauptlängsachse direkt in der Drehachsenebene E liegt (oder minimal abweichend davon), so wird bei einer Verlängerung der Aktuatoren 17a, 17b das Bauteil 100 in erster Linie auf Biegung belastet, da sich der untere Teil der inneren Hebelenden zueinander hinbewegen, während sich die oberen Ende voneinander wegbewegen. Aufgrund des Abstandes der Probenaufnahme 20b von der jeweiligen Drehachse seines entsprechenden Hebelelementes erfolgen noch leichte Zugbelastungen auf das Bauteil.

Befindet sich die Probe 100 hingegen außerhalb der Drehachsenebene E, so wird bei einer Verlängerung der Aktuatoren das Bauteil größtmöglich auf Druck belastet und minimal auf Biegung, während bei einer Verkürzung der Aktuatoren das Bauteil auf Zug belastet und minimal auf Biegung. Je weiter weg die Probe 100 dabei von der Drehachsenebene E angeordnet wird, desto geringer werden die entsprechenden Biegeanteile der Biegebelastung. Damit wird es darüber hinaus auch möglich, die Bauteilprobe 100 während eines Prüfdurchganges sowohl auf Biegung als auch auf Druck und/oder Zug zu belasten, wodurch die Bauteilprobe auf mehrere verschiedene Belastungsarten untersucht werden kann.

Die Aktuatoren können dabei auch separat und unabhängig voneinander angesteuert werden, wodurch auch Schubbelastungen auf die Probe 100 ausgeübt werden können. Dabei sind die beiden Adapterplatten 23a und 23b so ausgerichtet, dass die Bauteilprobe 100 mit ihrer Hauptlängsachse direkt in der Drehachsenebene E liegt. Die Belastung entsteht durch das gegensinnige Ansteuern der Aktuatoren um den gleichen Betrag. Aktuator 17a wird um den Betrag verlängert um den Aktuator 17b verkürzt wird oder umgekehrt. Dadurch wird in der Mitte der Probe 100 eine nahezu biegefreie Schublast erzeugt.

### Bezugszeichenliste

- 10: - Prüfstand
- 11: - Grundplatte
- 12a, 12b: - Lasteinleitungseinheiten
- 13a, 13b: - Drehlager
- 14a, 14b: - Widerlager
- 15a, 15b: - Hebelelemente
- 16a, 16b: - äußeres Ende
- 17a, 17b: - Aktuatoren
- 18a, 18b: - Gegenlager der Aktuatoren
- 19a, 19b: - inneres Ende der Hebel
- 20a, 20b: - Probenaufnahme
- 21: - Verbindungssteg
- 22b: - erste Adapterplatte
- 23b: - zweite Adapterplatte
- 24: - kreisförmige Langlöcher
- 25: - kreisförmiges Bohrmuster
- 100: - Probe

## Patentansprüche

1. Prüfstand (10) zum Untersuchen einer Probe (100), wobei der Prüfstand (10) aufweist:
- eine Grundplatte (11), und
- zwei an der Grundplatte (11) angeordnete Lasteinleitungseinheiten (12a, 12b), zwischen denen die zu untersuchende Probe (100) derart anbringbar ist, dass ein erstes Probenende an der ersten Lasteinleitungseinheit (12a) und ein dem ersten Probenende gegenüberliegendes zweites Probenende an der zweiten Lasteinleitungseinheit (12b) befestigt ist,
- wobei jede Lasteinleitungseinheit (12a, 12b) aufweist:
o ein Hebelelement (15a, 15b), welches über ein Drehlager (13a, 13b) mit der Grundplatte (11) verbunden ist,
o mindestens einen Aktuator (17a, 17b), der an einem äußeren Hebelende (16a, 16b) des Hebelelementes (15a, 15b), welches sich von dem Drehlager (13a, 13b) in entgegengesetzte Richtung zu der jeweils andern Lasteinleitungseinheit (12a, 12b) erstreckt, derart befestigt ist, dass durch eine Längenänderung des Aktuators das Hebelelement (15a, 15b) um die Drehachse des Drehlagers (13a, 13b) gedreht wird, und
o eine Probenaufnahme (20a, 20b), die an einem inneren Hebelende (19a, 19b) des Hebelelementes (15a, 15b), welches sich von dem Drehlager (13a, 13b) in Richtung zu der jeweils andern Lasteinleitungseinheit (12a, 12b) erstreckt, vorgesehen ist und die zum Befestigen zumindest eines Probenendes der zu untersuchenden Probe (100) ausgebildet ist,
- wobei die Lasteinleitungseinheiten (12a, 12b) an der Grundplatte (11) derart angeordnet sind, dass sich die jeweiligen Probenaufnahmen (20a, 20b) an den inneren Hebelenden (19a, 19b) gegenüberliegen und durch Längenänderungen der Aktuatoren mindestens eine Biege-, Druck-, Zug- und/oder Schublast auf die zwischen den Probenaufnahmen (20a, 20b) befestigte Probe (100) aufbringbar ist,
- und wobei die Drehachsen beider Lasteinleitungseinheiten eine gemeinsame Drehachsenebene (E) bilden.

2. Prüfstand (10) nach Anspruch 1, **dadurch gekennzeichnet, dass** bei jeder Lasteinleitungseinheit (12a, 12b) das Drehlager (13a, 13b) des Hebelelementes (15a, 15b) derart mit der Grundplatte (11) verbunden ist, dass die Drehachse des Drehlagers (13a, 13b) im Wesentlichen senkrecht zu der Grundplatte (11) steht.

3. Prüfstand (10) nach Anspruch 1 oder 2, **dadurch gekennzeichnet, dass** bei jeder Lasteinleitungseinheit (12a, 12b) das Drehlager (13a, 13b) des Hebelelementes (15a, 15b) an einem an der Grundplatte (11) angeordneten Widerlager (14a, 14b) befestigt ist.

4. Prüfstand (10) nach Anspruch 3, **dadurch gekennzeichnet, dass** das Drehlager (13a, 13b) an dem Widerlager (14a, 14b) lösbar und verschiebbar in Richtung der jeweils anderen Lasteinleitungseinheit (12a, 12b) angeordnet ist.

5. Prüfstand (10) nach Anspruch 3 oder 4, **dadurch gekennzeichnet, dass** die Drehlager (13a, 13b) der beiden Lasteinleitungseinheiten (12a, 12b) an den Widerlagern (14a, 14b) in Form einer Fest-Los-Lagerung befestigt sind.

6. Prüfstand (10) nach einem der vorhergehenden Ansprüche, **dadurch gekennzeichnet, dass** bei jeder Lasteinleitungseinheit (12a, 12b) die Probenaufnahme (20a, 20b) an einer Adapterplatte (22b, 23b) derart angeordnet ist, dass die Probenaufnahme (20a, 20b) in einer beliebigen Winkelposition um die Probenlängsachse an dem inneren Hebelende (19a, 19b) montiert werden kann.

7. Prüfstand (10) nach einem der vorhergehenden Ansprüche, **dadurch gekennzeichnet, dass** bei jeder Lasteinleitungseinheit (12a, 12b) die Probenaufnahme (20a, 20b) an einer Adapterplatte (22b, 23b) derart angeordnet ist, dass die Probenaufnahme (20a, 20b) gegenüber einer Drehachsenebene, die durch die Drehachsen beider Drehlager (13a, 13b) der Lasteinleitungseinheiten (12a, 12b) gebildet wird, verschiebbar an dem inneren Hebelende (19a, 19b) montiert werden kann.

8. Prüfstand (10) nach Anspruch 7, **dadurch gekennzeichnet, dass** beide Probenaufnahmen (20a, 20b) derart an dem inneren Hebelende (19a, 19b) montiert werden können, dass die Probenhauptachse in der Drehachsenebene und/oder dass die Probenhauptachse in einem gewissen Abstand zu der Drehachsenebene liegt.

9. Prüfstand (10) nach einem der vorhergehenden Ansprüche, **dadurch gekennzeichnet, dass** die Lasteinleitungseinheiten (12a, 12b) spiegelsymmetrisch an der Grundplatte (11) angeordnet sind.

10. Prüfstand (10) nach einem der vorhergehenden Ansprüche, **dadurch gekennzeichnet, dass** der Prüfstand (10) eine Steuerungseinheit zum Ansteuern der Aktuatoren (17a, 17b) hat, wobei die Steuerungseinheit eingerichtet ist, jeden Aktuator (17a, 17b) individuell und unabhängig von dem andere anzusteuern.

## Claims

1. Test stand (10) for testing a sample (100), the test stand (10) having:
- a base plate (11), and
- two load introduction units (12a, 12b) which are arranged on the base plate (11) and between which the sample (100) to be tested can be attached in such a way that a first sample end is fastened to the first load introduction unit (12a) and a second sample end, lying opposite the first sample end, is fastened to the second load introduction unit (12b),
- each load introduction unit (12a, 12b) having:
o a lever element (15a, 15b) which is connected via a pivot bearing (13a, 13b) to the base plate (11),
o at least one actuator (17a, 17b) which is fastened to an outer lever end (16a, 16b) of the lever element (15a, 15b) which extends from the pivot bearing (13a, 13b) in the opposite direction to the respective other load introduction unit (12a, 12b) in such a way that the lever element (15a, 15b) is rotated about the rotational axis of the pivot bearing (13a, 13b) by way of a length change of the actuator, and
o a sample holder (20a, 20b) which is provided at an inner lever end (19a, 19b) of the lever element (15a, 15b) which extends from the pivot bearing (13a, 13b) in the direction of the respective other load introduction unit (12a, 12b), which sample holder (20a, 20b) is configured to fasten at least one sample end of the sample (100) to be tested,
- the load introduction units (12a, 12b) being arranged on the base plate (11) in such a way that the respective sample holders (20a, 20b) lie opposite one another at the inner lever ends (19a, 19b), and at least one bending, compressive, tensile and/or shear load can be applied by way of length changes of the actuators to the sample (100) which is fastened between the sample holders (20a, 20b),
- and the rotational axes of the two load introduction units forming a common rotational axis plane (E).

2. Test stand (10) according to Claim 1, **characterized in that**, in the case of each load introduction unit (12a, 12b), the pivot bearing (13a, 13b) of the lever element (15a, 15b) is connected to the base plate (11) in such a way that the rotational axis of the pivot bearing (13a, 13b) lies substantially perpendicularly with respect to the base plate (11).

3. Test stand (10) according to Claim 1 or 2, **characterized in that**, in the case of each load introduction unit (12a, 12b), the pivot bearing (13a, 13b) of the lever element (15a, 15b) is fastened to an abutment (14a, 14b) which is arranged on the base plate (11) .

4. Test stand (10) according to Claim 3, **characterized in that** the pivot bearing (13a, 13b) is arranged on the abutment (14a, 14b) such that it can be released and displaced in the direction of the respective other load introduction unit (12a, 12b).

5. Test stand (10) according to Claim 3 or 4, **characterized in that** the pivot bearing (13a, 13b) of the two load introduction units (12a, 12b) are fastened to the abutments (14a, 14b) in the form of a fixed/floating mounting system.

6. Test stand (10) according to one of the preceding claims, **characterized in that**, in the case of each load introduction unit (12a, 12b), the sample holder (20a, 20b) is arranged on an adapter plate (22b, 23b) in such a way that the sample holder (20a, 20b) can be mounted at the inner lever end (19a, 19b) in any desired angular position around the sample longitudinal axis.

7. Test stand (10) according to one of the preceding claims, **characterized in that**, in the case of each load introduction unit (12a, 12b), the sample holder (20a, 20b) is arranged on an adapter plate (22b, 23b) in such a way that the sample holder (20a, 20b) can be mounted at the inner lever end (19a, 19b) such that it can be displaced with respect to a rotational axis plane which is formed by way of the rotational axes of the two pivot bearings (13a, 13b) of the load introduction units (12a, 12b) .

8. Test stand (10) according to Claim 7, **characterized in that** the two sample holders (20a, 20b) can be mounted at the inner lever end (19a, 19b) in such a way that the sample main axis lies in the rotational axis plane, and/or that the sample main axis lies at a certain spacing from the rotational axis plane.

9. Test stand (10) according to one of the preceding claims, **characterized in that** the load introduction units (12a, 12b) are arranged in a mirror-symmetrical manner on the base plate (11).

10. Test stand (10) according to one of the preceding claims, **characterized in that** the test stand (10) has a control unit for actuating the actuators (17a, 17b), the control unit being set up to actuate each actuator (17a, 17b) individually and independently of the other one.

## Revendications

1. Banc d'essai (10) pour inspecter un échantillon (100), le banc d'essai (10) comprenant :
- un plateau de base (11), et
- deux unités d'introduction de charge (12a, 12b) disposées sur le plateau de base (11), entre lesquelles l'échantillon (100) à inspecter peut être monté de telle sorte qu'une première extrémité d'échantillon est fixée à la première unité d'introduction de charge (12a) et qu'une deuxième extrémité d'échantillon opposée à la première extrémité d'échantillon est fixée à la deuxième unité d'introduction de charge (12b),
dans lequel
- chaque unité d'introduction de charge (12a, 12b) comprend :
∘ un élément de levier (15a, 15b) qui est relié au plateau de base (11) par l'intermédiaire d'un palier de rotation (13a, 13b),
∘ au moins un actionneur (17a, 17b) qui est fixé à une extrémité de levier extérieure (16a, 16b) de l'élément de levier (15a, 15b) s'étendant depuis le palier de rotation (13a, 13b) en direction opposée à l'autre unité d'introduction de charge (12a, 12b) respective, de telle sorte qu'une modification de la longueur de l'actionneur fait tourner l'élément de levier (15a, 15b) autour de l'axe de rotation du palier de rotation (13a, 13b), et
∘ un logement d'échantillon (20a, 20b) qui est prévu à une extrémité de levier intérieure (19a, 19b) de l'élément de levier (15a, 15b) s'étendant depuis le palier de rotation (13a, 13b) en direction de l'autre unité d'introduction de charge respective (12a, 12b) et qui est réalisé pour fixer au moins une extrémité d'échantillon de l'échantillon (100) à inspecter,
- les unités d'introduction de charge (12a, 12b) sont disposées sur le plateau de base (11) de telle sorte que les logements d'échantillon respectifs (20a, 20b) se trouvent en face l'un de l'autre au niveau des extrémités de levier intérieures (19a, 19b) et que des modifications en longueur des actionneurs permettent d'appliquer au moins une charge de flexion, de compression, de traction et/ou de poussée à l'échantillon (100) fixé entre les logements d'échantillon (20a, 20b),
- et les axes de rotation des deux unités d'introduction de charge forment un plan d'axes de rotation (E) commun.

2. Banc d'essai (10) selon la revendication 1,
**caractérisé en ce que**, pour chaque unité d'introduction de charge (12a, 12b), le palier de rotation (13a, 13b) de l'élément de levier (15a, 15b) est relié au plateau de base (11) de telle sorte que l'axe de rotation du palier de rotation (13a, 13b) est sensiblement perpendiculaire au plateau de base (11).

3. Banc d'essai (10) selon la revendication 1 ou 2,
**caractérisé en ce que**, pour chaque unité d'introduction de charge (12a, 12b), le palier de rotation (13a, 13b) de l'élément de levier (15a, 15b) est fixé à une contrebutée (14a, 14b) disposée sur le plateau de base (11).

4. Banc d'essai (10) selon la revendication 3,
**caractérisé en ce que** le palier de rotation (13a, 13b) est disposé sur la contrebutée (14a, 14b) de manière amovible et déplaçable en translation en direction de l'autre unité d'introduction de charge (12a, 12b) respective.

5. Banc d'essai (10) selon la revendication 3 ou 4,
**caractérisé en ce que** les paliers de rotation (13a, 13b) des deux unités d'introduction de charge (12a, 12b) sont fixés aux contrebutées (14a, 14b) sous forme de montage à palier fixe-libre.

6. Banc d'essai (10) selon l'une des revendications précédentes,
**caractérisé en ce que**, pour chaque unité d'introduction de charge (12a, 12b), le logement d'échantillon (20a, 20b) est disposé sur une plaque d'adaptation (22b, 23b) de telle sorte que le logement d'échantillon (20a, 20b) peut être monté sur l'extrémité de levier intérieure (19a, 19b) dans une position angulaire quelconque autour de l'axe longitudinal de l'échantillon.

7. Banc d'essai (10) selon l'une des revendications précédentes,
**caractérisé en ce que**, pour chaque unité d'introduction de charge (12a, 12b), le logement d'échantillon (20a, 20b) est disposé sur une plaque d'adaptation (22b, 23b) de telle sorte que le logement d'échantillon (20a, 20b) peut être monté sur l'extrémité de levier intérieure (19a, 19b) de manière à pouvoir être déplacé en translation par rapport à un plan d'axes de rotation formé par les axes de rotation des deux paliers de rotation (13a, 13b) des unités d'introduction de charge (12a, 12b).

8. Banc d'essai (10) selon la revendication 7,
**caractérisé en ce que** les deux logements d'échantillon (20a, 20b) peuvent être montés sur l'extrémité de levier intérieure (19a, 19b) de telle sorte que l'axe principal d'échantillon se trouve dans le plan d'axes de rotation et/ou que l'axe principal d'échantillon se trouve à une certaine distance du plan d'axes de rotation.

9. Banc d'essai (10) selon l'une des revendications précédentes,
**caractérisé en ce que** les unités d'introduction de charge (12a, 12b) sont disposées à symétrie axiale sur le plateau de base (11).

10. Banc d'essai (10) selon l'une des revendications précédentes,
**caractérisé en ce que** le banc d'essai (10) comporte une unité de commande pour piloter les actionneurs (17a, 17b), l'unité de commande étant conçue pour piloter chaque actionneur (17a, 17b) individuellement et indépendamment de l'autre.
